# FASCICULE DE BREVET EUROPEEN

(11) **EP 1 322 409 B1**
(45) Date de publication et mention de la délivrance du brevet: **05.12.2007**
(21) Numéro de dépôt: 01972150.5
(22) Date de dépôt: 12.09.2001
(51) Int. Cl.: B01D 71/52, B01D 53/22

(54) **MEMBRANES POUR LA SEPARATION SELECTIVE GAZEUSE**
MEMBRAN ZUR SELECTIVEN GASTRENNUNG
MEMBRANES FOR SELECTIVE GAS SEPARATION

(30) Priorité: 15.09.2000 FR 0011811
(43) Date de publication de la demande: 02.07.2003
(73) Titulaire: CENTRE NATIONAL DE LA RECHERCHE SCIENTIFIQUE (CNRS), 75016 Paris (FR)
(72) Inventeur: SANCHEZ, José-Gregorio, F-34160 Castries (FR); GRAMAIN, Philippe, F-34980 Saint Gely du Fesc (FR)
(74) Mandataire: Domenego, Bertrand
(86) Numéro de dépôt international: PCT/FR2001/002833
(87) Numéro de publication internationale: WO 2002/022245

(56) Documents cités:
- DE-A- 4 237 604
- US-A- 5 254 354
- US-A- 5 936 004

## Description

La présente invention concerne l'utilisation d'une membrane ou d'un film élastomère hydrophile, biocompatible et biodégradable pour la séparation sélective d'un mélange gazeux.

La séparation gazeuse à l'aide de membranes constituées par des polymères est un procédé en pleine évolution et elle est utilisée dans de nombreux domaines de l'industrie.

Divers procédés de séparation et de purification de gaz et notamment d'hydrogène sont mis en oeuvre dans des installations comportant de très grandes surfaces membranaires (Avrillon, et al, « Les Techniques de Séparation de Gaz par Membranes », Revue de l'Institut Français du Pétrole, 45, 4, juillet-août 1990).

Dans le domaine du traitement des gaz naturels ou de synthèse, la séparation et la purification des composants sont indispensables pour répondre aux besoins croissants des utilisateurs. Ainsi, le gaz naturel brut et les composants dérivés doivent être débarrassés entre autre du gaz carbonique contenu par une opération dite de désacidification. Dans ce contexte, les procédés par membranes organiques présentent de nombreux avantages (faible investissement, faible consommation d'énergie) pour autant que les membranes présentent un pouvoir de séparation et une productivité élevés.

L'élaboration de membranes organiques semi-perméables et leurs utilisations pour la séparation gazeuse ont été envisagées à partir de polymères de structures très variées. Si les polymères les plus étudiés sont les polymères vitreux, tels que par exemple les polyimides, les polysulfones et les polyphénylène oxydes, les élastomères tels que les polysiloxanes par exemple présentent aussi un grand intérêt. Les polymères vitreux ont en général une bonne sélectivité, mais leur perméabilité est souvent insuffisante, alors que les élastomères ont une bonne perméabilité, mais sont moins sélectifs (A. Stern, J. of Membr. Sci. 94, 1994 ; S. T. Hwang, et al., Separation Science, 9(6) 1974). De manière générale, il a été constaté qu'il existe une relation inverse entre sélectivité et perméabilité : meilleure est la sélectivité, plus faible est la perméabilité.

Dans le domaine de l'emballage des végétaux (fruits et légumes) et afin de ralentir les phénomènes internes de maturation, il est apparu nécessaire de contrôler l'humidité ambiante et l'intensité respiratoire du végétal emballé conduisant à une absorption d'oxygène et une libération de gaz carbonique. Ainsi, la diminution de la teneur en oxygène et/ou l'augmentation de la teneur en dioxyde de carbone de l'atmosphère dans laquelle le végétal est confiné ont pour effet de ralentir son métabolisme. Cependant, de très fortes concentrations en gaz carbonique et de trop faibles concentrations en oxygène peuvent entraîner une fermentation susceptible d'altérer l'aspect et les propriétés organo-leptiques du végétal. Il est donc nécessaire d'ajuster la perméabilité des films en fonction des végétaux à conserver.

FR-2776534 (SEB) décrit des membranes ayant une bonne perméabilité et une bonne sélectivité vis à vis du dioxyde de carbone, et leur utilisation pour la conservation de fruits et légumes. Ces membranes comportent un support comprenant un polymère poreux hydrophobe revêtu d'une couche de silicone non poreuse renforcée par des particules minérales adaptées à réguler les transferts de vapeur d'eau. Les performances de ces membranes pour l'application envisagée sont cependant limitées par le caractère hydrophobe du polymère utilisé et par sa faible tenue mécanique qui nécessite l'utilisation d'un support.

US-5254354 (Landec Corporation, Menlo Park, CA) décrit des membranes dont la perméabilité varie radicalement et réversiblement en fonction de la température. Ces membranes sont constituées de polymères à chaînes latérales cristallisables et particulièrement des petites chaînes de polyoxyde d'éthylène.

US-5506024 (Atochem, FR) décrit des films thermoplastiques élastomères à base de polyetheresteramide avec notamment des blocs de polyéthylène glycol. Ces films sont très perméables à la vapeur d'eau et à de nombreux gaz.

Le but de la présente invention est de fournir des membranes en élastomère présentant simultanément une bonne perméabilité et une bonne sélectivité vis à vis d'un composé gazeux donné, une tenue mécanique suffisante pour pouvoir être utilisées sous forme de films auto-supportés très minces, une hydrophilie contrôlée et une bonne biodégradabilité dues à leur composition chimique.

La présente invention a donc pour objet une membrane pour la séparation gazeuse sélective, un procédé pour la séparation gazeuse mettant en oeuvre ladite membrane, ainsi que l'application du procédé à la séparation et l'élimination de l'oxyde de carbone contenu dans un mélange gazeux et à la conservation des fruits et légumes frais.

La membrane élastomère selon la présente invention est constituée par un copolymère d'oxyde d'éthylène (I) ou par un matériau polymère obtenu par réticulation et/ou par greffage d'un tel copolymère (I), ledit copolymère (I) étant caractérisé en ce qu'il est constitué par :
- au moins 30% en nombre d'unités -CH₂CH₂O- dérivées de l'oxyde d'éthylène (désignées ci-après par "unités OE"), et
- au moins 2% en nombre d'unités -CHR-CH₂O- dérivées d'un oxirane portant un substituant R réticulable (désignées ci-après par "unités OER") et/ou d'unités -CHR₁-CH₂O-dérivées d'un oxirane portant un substituant non réticulable R₁ (désignées ci-après par "unités OER1").

Dans un mode de réalisation particulier de l'invention, tous les substituants réticulables R sont identiques et/ou tous les substituants non réticulables R₁ sont identiques. Dans un autre mode de réalisation, le copolymère porte des substituants R différents et/ou des substituants R₁ différents, ce qui permet d'ajuster certaines propriétés des membranes.

Les proportions respectives des différentes unités OE, OER et OER1 sont choisies de telle sorte que le polymère présente, éventuellement après réticulation, une cristallinité suffisamment faible pour ne pas nuire à la perméabilité de la membrane, une tenue mécanique suffisante pour la membrane, et un caractère hydrophile/hydrophobe adapté à l'utilisation envisagée pour la membrane, notamment pour favoriser la diffusion des gaz solubles dans l'eau, tels que CO₂ par exemple. Des choix particuliers effectués dans le domaine de composition précité permettent d'ajuster les propriétés et les caractéristiques de la membrane au traitement d'un mélange gazeux ou d'un gaz particulier.

Lorsque les membranes sont destinées à être utilisées à des températures faibles, il est préférable d'utiliser un copolymère plus riche en unités -OER- et/ou en unités-OER1-. Lorsque les membranes sont destinées à être utilisées à des températures plus élevées, supérieures à environ 60°C, la cristallinité d'un poly(oxyéthylène) tend à disparaître et l'on peut donc utiliser des copolymères ayant un teneur très élevée en unités -OE-. Dans ce cas cependant, il peut être utile d'améliorer la tenue mécanique de la membrane en réticulant le copolymère à un degré plus ou moins important en fonction du résultat souhaité.

Le substituant R1 est choisi parmi les radicaux alkyles ayant de 1 à 16 atomes de carbone (plus particulièrement les radicaux alkyles ayant de 1 à 8 atomes de carbone), les radicaux comprenant une ou plusieurs fonctions thioéther et/ou une ou plusieurs fonctions éther (par exemple des radicaux -(CH₂)ₙ-O-((CH₂)ₘ-O)ₚ-R', R' étant H, un alkyle ou un phényle, 0 ≤ n ≤ 4, 1 ≤ m ≤ 4 et 0 ≤ p ≤ 20), les radicaux comprenant un groupe carboxyle ou un groupe hydroxyle (par exemple -CH₂OH ou -(CH₂)ₙ-COOCH₃). Il est particulièrement avantageux d'utiliser, pour la membrane de l'invention, un copolymère contenant des unités -OER1- dans lesquelles R₁ est CH₃, lesdites unités étant dérivées de l'oxyde de propylène.

R est un substituant qui permet de réticuler le copolymère (I). R peut être un radical comprenant une fonction réticulable par substitution, telle que par exemple un radical haloalkyle, les radicaux halométhyle ou haloéthyle étant particulièrement préférés, en particulier le radical chlorométhyle.

Le substituant R peut aussi être un radical comprenant une fonction réticulable par addition, par exemple une double liaison >C=C< ou une triple liaison -C≡C-. On peut citer en particulier les radicaux alkényles CH₂=CH-(CH₂)_{q}- dans lesquels 1 ≤ q ≤ 6 et les radicaux CH₃-(CH₂)_{y}-CH=CH-(CH₂)ₓ- dans lesquels 0 ≤ x+y ≤ 5 et 0 ≤ x, en particulier ceux qui ont de 3 à 10 atomes de carbone, tels que -CH₂OCH₂-CH=CH₂ ou -CH₂-CH=CH-CH₃. On peut également citer les radicaux allyloxyalkylènes ayant de 4 à 8 atomes de carbone, par exemple -CH₂-O-CH₂-CH=CH₂).

Le substituant R peut en outre être un radical réticulable par irradiation UV ; parmi ces radicaux, on peut citer ceux qui comportent une double liaison >C=C< ou une triple liaison -C≡C-. R peut aussi comporter une double liaison activée capable de réticuler par cycloaddition ; à titre d'exemple, on peut citer les groupes cinnamates ou chalcone. De tels groupes peuvent notamment être incorporés au copolymère par greffage sur les substituants haloalkyles.

Un copolymère (I) peut être réticulé par irradiation de rayons γ, d'électrons, ou d'autres particules énergétiques. Dans ce cas, la présence d'unités récurrentes OER n'est pas indispensable. La radiation très énergétique utilisée peut créer par arrachement d'atomes des radicaux très réactifs qui réagissent entre eux, les performances étant améliorées par addition de molécules donneuses de protons, par exemple de l'eau. Selon la composition des copolymères et la nature des unités récurrentes qui les constituent, les membranes pourront présenter un caractère thermoplastique dû à une cristallinité résiduelle qui être mise à profit pour faciliter la mise en forme. Ainsi, un copolymère d'oxyde d'éthylène et d'épichlorhydrine EO/EP dans lequel le substituant R est un radical chloroéthyle non réticulé et le rapport en nombre EO/EP est de 90/10, contient à température ambiante une cristallinité qui représente environ 20% de celle d'un POE pur.

Une membrane selon l'invention aura de préférence une épaisseur entre 10 et 100 µm si elle est destinée à être utilisée sous forme autosupportée. Une membrane très mince ayant par exemple une épaisseur de quelques microns, est de préférence déposée sur un support poreux.

Les membranes comprenant des unités OE et des unités OER et les membranes comprenant des unités OE, des unités OP (dérivées d'oxyde de propylène) et des unités OER dans lesquelles R est un haloalkyle sont particulièrement utiles comme membranes dans un procédé de traitement d'un mélange gazeux visant à séparer sélectivement le dioxyde de carbone. Les copolymères d'oxyde d'éthylène (OE) et d'haloalkyle, en particulier lorsque l'haloalkyle est une épihalohydrine (EH), peuvent être utilisés pour élaborer des films hydrophiles qui ont une température de transition vitreuse faible (entre -60°C et -40°C) et qui présentent à la fois une perméabilité élevée et une bonne sélectivité pour le dioxyde de carbone. Pour la séparation du dioxyde de carbone contenu dans un mélange gazeux, on utilise avantageusement une membrane obtenue à partir d'un copolymère d'oxyde d'éthylène (OE) et d'épichlorhydrine (EP) dans lequel le rapport en nombre des deux comonomères est de préférence tel que 50/50 < OE/EP < 98/2, plus particulièrement 70/30 < OE/EP < 95/5. Dans ces copolymères, on peut avantageusement remplace une partie des unités oxyde d'éthylène par des unités oxyde de propylène.

Les copolymères (I) peuvent être obtenus par des procédés de l'art antérieur tels que par copolymérisation anionique ou cationique d'oxyde d'éthylène et d'oxirane portant un groupe R et/ou d'oxirane portant un groupe R¹. La polymérisation cationique met en oeuvre notamment un catalyseur du type Vandenberg et implique le plus souvent un mécanisme de coordination. On peut en outre utiliser avantageusement les copolymères commercialisés sous forme non réticulée. A titre d'exemple de copolymères OE/EP, on peut citer les copolymères commercialisés par la société DAISO sous la dénomination Epichlomer ou par la société ZEON sous la dénomination Hydrin. Ces copolymères sont constitués par des unités de différents oxiranes substitués ou non, dérivés notamment de l'oxyde d'éthylène, de l'oxyde de propylène, de l'épichlohydrine et de l'éther allyle glycidique.

Les membranes sont élaborées par mise en forme d'une composition contenant le copolymère (I), et éventuellement une charge minérale ou une charge organique. La mise en forme peut se faire par exemple par extrusion ou par enduction, ce qui permet d'obtenir des films réticulés ou non de très faibles épaisseurs, de l'ordre de quelques micromètres. Les masses moléculaires en poids des copolymères utilisés seront adaptées au procédé de mise en forme choisi et à l'application visée. Ainsi, on utilisera préférentiellement des masses moléculaires en poids élevées, obtenue typiquement par polymérisation cationique, pour favoriser la tenue mécanique des films.

Si l'on utilise, pour l'élaboration d'une membrane selon l'invention, un copolymère qui doit subir une réticulation, la composition de copolymère (I) contient en outre les réactifs appropriés, par exemple un agent de réticulation, un capteur d'acide (lorsque la réaction de réticulation libère un composé acide) et éventuellement un accélérateur de réticulation. La réticulation peut être effectuée pendant ou après la mise en forme des membranes. Le taux de réticulation du copolymère utilisé pour l'élaboration d'une membrane doit être suffisant pour assurer la cohésion et la tenue mécanique de la membrane. La réticulation et notamment la quantité d'agent réticulant sont adaptées de préférence pour que 2 à 20% des motifs -OER- participent à la réticulation. Lorsque le comonomère est l'épichlorhydrine, l'agent réticulant, qui est généralement di- ou tri-fonctionnel, est choisi avantageusement parmi ceux qui réagissent avec le radical chlorométhyle pour former HCl ou un sel chlorure. A titre d'exemple, on peut citer l'acide trithiocyanurique ou ses sels commercialisés sous la marque Zysnet® par la société Zeon, le 6-méthyl-quinoxaline-2,3-dithiocarbonate commercialisé sous la marque Daisonet par la société Daiso. De manière générale, on peut utiliser des composés di- ou pluri- fonctionnels comportant des groupes réactifs du type thiol ou leurs sels, des alcools, des alcoolates ou des amines. Ainsi, par exemple on utilisera avantageusement le 2,5-dimercapto-1,3,4-thiadiazole (Bismuththiol) ou ses sels, les composés bis(aminopropyl)éther, tels que par exemple les produits commercialisés sous la marque Jeffamine® par la société Huntsman et les amines cycliques telles que le 1,4-diazabicyclo(2.2.2)octane commercialisé sous la marque Dabco par la société Air Products and Chemicals. Le taux de réticulation est contrôlé par la quantité d'agent de réticulation, la température et la durée du traitement.

Suivant la nature des unités OER et OER1 entrant dans la composition du copolymère, la réaction de réticulation peut être initiée par voie thermique, par voie photochimique et radiative ou par micro-onde. Ainsi lorsque la membrane est élaborée par extrusion ou enduction, la réaction de réticulation peut se faire pendant ou après la mise en forme.

Dans un mode de réalisation particulier, on prépare une membrane d'un matériau réticulé portant des groupes R¹, en réticulant partiellement un copolymère d'oxyde d'éthylène et d'un oxirane portant des groupes réticulables R haloalkyle, de préférence chlorométhyle, et en faisant réagir le matériau partiellement réticulé obtenu avec un composé approprié capable de réagir avec les groupes haloalkyles en fixant des groupes R¹. Dans ce cas particulier, les groupements R¹ sont introduits dans la membrane, non pas lors de l'élaboration du copolymère, mais lors de l'élaboration de la membrane à partir d'un copolymère. On utilise dans ce cas, pour l'élaboration de la membrane, une composition contenant le copolymère d'oxyde d'éthylène et d'un oxirane portant des groupes réticulables R, un agent de réticulation (en une quantité inférieure à celle qui serait nécessaire pour réticuler tous les groupes R) et un composé capable de réagir avec les groupes R qui ne participent pas à la réticulation. La réaction peut se faire lors de l'extrusion en même temps que la réticulation ou bien par un traitement ultérieur. Ce mode de réalisation particulier est intéressant car il permet d'éviter l'utilisation d'oxiranes portant des substituants R¹ qu'il est souvent coûteux ou difficile, voire impossible de produire.

Les membranes de l'invention sont particulièrement efficaces pour la séparation sélective de mélanges gazeux. La présence des unités OE leur confère un caractère hydrophile, qui peut être modulé par la présence d'unités OER ou OER1 à caractères hydrophobes. Les membranes OE/EP en particulier sont très efficaces pour la séparation sélective d'un gaz hydrophile contenu dans un mélange gazeux, en particulier le dioxyde de carbone. C'est pourquoi les membranes de l'invention, en particulier celles qui sont élaborées à partir de copolymères d'oxyde d'éthylène et d'épichlorhydrine, présentent un grand intérêt dans divers domaines de l'industrie mettant en jeu du dioxyde de carbone. On citera par exemple l'utilisation pour la séparation et l'élimination du dioxyde de carbone contenu dans les gaz naturels ou industriels (désacidification des gaz) ou pour la conservation de végétaux (fruits et légumes).

La présente invention est décrite plus en détail par référence aux exemples donnés ci-après, auxquels l'invention n'est toutefois pas limitée.

### Exemple 1

### Préparation des membranes réticulées à partir de copolymères d'oxyde d'éthyle (OE) et d'épichlorhydrine (EP).

On a préparé les membranes 100, 200-1, 200-2, 300-1, 400-1, 400-2, 1200a, 1300a et 1100c à l'aide de copolymères dont les compositions (en nombre de moles) sont indiquées dans le tableau I, selon le mode opératoire suivant. Le copolymère utilisé pour la membrane 300-1 est commercialisé sous la dénomination Hydrin C2000 par la société Zeon.

10 g de copolymère sont mis en solution dans 250 cm³ d'acétonitrile. Pour les copolymères riches en épichlorhydrine, une partie de l'acétonitrile est remplacée par du dichlorométhane. Après dissolution complète, la solution est concentrée par évaporation à froid pour obtenir environ 60 ml de solution visqueuse. On ajoute 0,5 g de K-Bismuthiol préalablement dissous dans 5 cm³ d'acétonitrile. La solution est ensuite coulée sur un support plat anti-adhésif, séchée à température ambiante, puis traitée en étuve 10 minutes à 150°C.

La réticulation est contrôlée par mesure des taux de gonflement des membranes dans l'eau et dans le dichlorométhane.

### Exemple 2

### Préparation des membranes non réticulées

On a préparé les membranes 500 et 600 à partir de copolymères dont les compositions (en nombre de moles) sont indiquées dans le tableau I, et la membrane 700 à partir d'un homopolymère d'épichlorhydrine, à titre comparatif.

On a mis en oeuvre le mode opératoire de l'exemple 1, en omettant l'agent de réticulation.

### Exemple 3

### Mesure des la perméabilité des membranes aux gaz purs

Les mesures de perméabilité aux gaz purs ont été réalisées par la méthode dite manométrique basée sur la norme ASTM D 1434 (Standard test method for determining gas permeability characteristics of plastic film and sheeting, reaprouved 1988). On a utilisé en outre une enceinte à température contrôlée (±0,1°C) et des capteurs de pression de très grande précision (MKS Baratron 0-100 mbar). L'exploitation des données est basée sur la résolution des équations de Fick pour la diffusion gazeuse dans un film dense selon S.W. Rutherford and D.D. Do, [Review of time lag permeation technique as a method for characterisation of porous media and membranes, Adsorption, 3, (1997) 283-312].

L'appareillage est essentiellement composé d'un module membranaire adapté à la géométrie plane des films, ledit module étant connecté en amont à compartiment permettant une alimentation gazeuse (jusqu'à 7 bar). En aval se trouve un compartiment formant un volume calibré. Un système de vide (primaire et secondaire, jusqu'à 10⁻⁹ mbars) permet de réaliser un dégazage poussé des membranes et des deux compartiments (amont et aval). Après le dégazage, une pression constante de 3 bars est introduite du côté amont pendant que l'augmentation de pression dans le volume calibré en aval est enregistrée (à travers un système d'acquisition de données couplé avec un ordinateur) en fonction du temps. La courbe obtenue présente une partie transitoire (time lag) et une partie permanente, la perméabilité étant déduite de cette dernière.

Les propriétés de perméabilité des membranes préparées selon les exemples 1 et 2, mesurées en gaz purs, sont rassemblées dans le tableau (I) ci-dessous. Il s'agit de la perméabilité Barrer exprimée en 10⁻¹⁰cm³STP.cm.cm⁻²s⁻¹.cmHg⁻¹. La sélectivité est le rapport des perméabilités.

Les résultats confirment que les membranes obtenues à partir d'un copolymère d'oxyde d'éthylène et d'épichlorhydrine présentent d'excellentes performances pour la séparation du dioxyde de carbone contenu dans un mélange gazeux, tant en terme de perméabilité que de sélectivité. L'exemple comparatif réalisé à partir d'une membrane d'homopolymère d'épichlorhydrine montre la très faible perméabilité à CO₂ de cette membrane.

**Tableau (I)**

| **Références membrane** | 100 | 200-1 | 200-2 | 300-1 | 400-2 | 400-1 | 700 | 500 | 600 | 1200a | 1300a | 1100c |
|---|---|---|---|---|---|---|---|---|---|---|---|---|
| % EO/EP/OP | 93/7/0 | 83/17/0 | 83/17/0 | 50/50/0 | 96/4/0 | 96/4/0 | 0/100/0 | 85/2/13 | 50/0/50 | 55,9/44,1 | 61/39 | 87/13 |
| Epaisseur en microns | 429 | 522 | 200 | 590 | 250 | 486 | 850 | 212 | 550 | 100 | 110 | 330 |

| **Perméabilité** | | | | | | | | | | | | |
|---|---|---|---|---|---|---|---|---|---|---|---|---|
| CH₄ | 6,2 | 4,5 | 4,6 | 3,3 | 3,9 | 3,3 | | 4,9 | 10,0 | 0,35 | | |
| CO₂ | 104 | 75,0 | 84,8 | 17,6 | 66,5 | 58,7 | 0,33 | 180 | 97,8 | 15,1 | 21,8 | 69,4 |
| H₂ | 9,5 | 8,5 | 7,5 | 5,2 | 8,0 | 5,5 | | 12,4 | | 2,95 | 4,5 | 7,7 |
| He | 7,5 | 5,0 | 2,7 | 3,9 | 4,3 | 3,3 | | 8,2 | | 2,5 | 2,7 | 4,3 |
| N₂ | 1,7 | 2,0 | 1,5 | 0,55 | 4,1 | 0,95 | 0,25 | 3,6 | 5,8 | 1,4 | 3,6 | 1,4 |
| O₂ | 4,6 | 4,0 | 5,7 | 1,1 | 3,1 | 2,8 | | 8,5 | 9,5 | 1 | 1,3 | 7,2 |
| C₂H₆ | 15,2 | - | 11,5 | 3,0 | 8,15 | - | | 42,4 | | | | |
| C₃H₈ | 39,8 | - | - | 23,0 | 10,8 | - | | 13,4 | | | | |
| C₄H₁₀ | 59,7 | - | 82,5 | 89,0 | 46,7 | - | | 101,0 | | | | |

| **Sélectivité** | | | | | | | | | | | | |
|---|---|---|---|---|---|---|---|---|---|---|---|---|
| CO₂/N₂ | 61 | 37,5 | 56,5 | 32 | 16,2 | 18 | 1,3 | 50 | 16,9 | 10,8 | 6,1 | 49,6 |
| CO₂/He | 14 | 15 | 31,4 | 4,5 | 15,5 | 18 | | 22 | | 6,0 | 8,1 | 16,1 |
| CO₂/H₂ | 11 | 8,8 | 11,3 | 3,5 | 8,3 | 10,4 | | 14,5 | | 5,1 | 4,8 | 9,0 |
| CO₂/O₂ | 23 | 18,8 | 14,9 | 16 | 21,5 | 21 | | 21,2 | 10,3 | 15,1 | 16,8 | 9,6 |
| CO₂/CH₄ | 17 | 16,7 | 18,4 | 16 | 17,1 | 18 | | 36,7 | 9,8 | 43,1 | - | |
| O₂/N₂ | 2,7 | 2,0 | 3,8 | 2,0 | 0,8 | 3,0 | | 2,4 | 1,6 | 0,7 | 0,4 | 5,1 |

## Revendications

1. Membrane pour la séparation sélective gazeuse, constituée par un copolymère d'oxyde d'éthylène (I) ou par un matériau polymère obtenu par réticulation d'un tel copolymère (I), ledit copolymère (I) étant **caractérisé en ce qu'**il est constitué par :
- au moins 30% en nombre d'unités -CH₂CH₂O- dérivées de l'oxyde d'éthylène, et
- au moins 2% en nombre d'unités -CHR-CH₂O-dérivées d'un oxirane portant un substituant R réticulable et/ou d'unités -CHR₁-CH₂O- dérivées d'un oxirane portant un substituant non réticulable R₁.

2. Membrane selon la revendication 1, **caractérisée en ce que** tous les substituants réticulables R sont identiques et/ou tous les substituants non réticulables R₁ sont identiques.

3. Membrane selon la revendication 1, **caractérisée en ce que** le copolymère porte des substituants R différents et/ou des substituants R₁ différents.

4. Membrane selon la revendication 1, **caractérisée en ce que** le substituant R1 est choisi parmi les radicaux alkyle ayant de 1 à 16 atomes de carbone, les radicaux comprenant une ou plusieurs fonctions éther ou thioéther, et les radicaux comprenant un groupe carboxyle ou un groupe hydroxyle.

5. Membrane selon la revendication 1, **caractérisée en ce que** le substituant R est un substituant qui permet de réticuler le copolymère (I).

6. Membrane selon la revendication 5, **caractérisée en que** ce R est un radical comprenant une fonction réticulable par substitution ou par addition.

7. Membrane selon la revendication 6, **caractérisée en ce que** R est un radical haloalkyle ou un radical comprenant une double liaison >C=C< ou une triple liaison -C≡C-.

8. Membrane selon la revendication 1, **caractérisée en ce que** le substituant R est un radical réticulable par irradiation UV.

9. Membrane selon la revendication 1, **caractérisée en ce qu'**elle est constituée par un matériau obtenu par réticulation par irradiation de rayons γ ou d'électrons d'un copolymère (I).

10. Membrane selon la revendication 1, **caractérisée en ce qu'**elle est élaborée à partir d'un copolymère d'oxyde d'éthylène OE et d'épichlorhydrine EP, dans lequel le rapport en nombre d'unités OE/EP est compris entre 50/50 et 98/2.

11. Procédé de séparation gazeuse sélective d'un mélange gazeux, **caractérisé en ce qu'**il comprend une étape au cours de laquelle on fait passer le mélange gazeux à travers une membrane selon l'une des revendications 1 à 10.

12. Procédé de séparation sélective de dioxyde de carbone contenu dans un mélange gazeux, **caractérisé en ce qu'**il comprend une étape au cours de laquelle on fait passer le mélange gazeux à travers une membrane selon l'une des revendications 1 à 10.

13. Procédé de conservation de fruits et de légumes frais, **caractérisé en ce qu'**il consiste à placer lesdits fruits ou légumes dans une enveloppe constituée par une membrane selon l'une des revendications 1 à 10.

## Claims

1. Membrane for the selective separation of gases, made of an ethylene oxide copolymer (I) or a polymeric material obtained by crosslinking of such a copolymer (I), the said copolymer (I) being **characterized in that** it comprises:
- at least 30 % in number of -CH₂CH₂O- units derived from ethylene oxide and
- at least 2 % in number of -CHR-CH₂O- units derived from an oxirane carrying a crosslinkable substituent R and/or of -CHR₁-CH₂O- units derived from an oxirane carrying a non-crosslinkable substituent R₁.

2. Membrane according to claim 1, **characterized in that** all the crosslinkable substituents R are identical and/or all the non-crosslinkable substituents R₁ are identical.

3. Membrane according to claim 1, **characterized in that** the copolymer carries different substituents R and/or different substituents R₁.

4. Membrane according to claim 1, **characterized in that** the substituent R₁ is chosen from alkyl radicals having from 1 to 16 carbon atoms, radicals containing one or more ether or thioether functions and radicals containing a carboxyl group or a hydroxyl group.

5. Membrane according to claim 1, **characterized in that** the substituent R is a substituent which allows crosslinking of the copolymer (I).

6. Membrane according to claim 5, **characterized in that** R is a radical containing a function which can be crosslinked by substitution or by addition.

7. Membrane according to claim 6, **characterized in that** R is a haloalkyl radical or a radical containing a >C=C< double bond or a -C≡C- triple bond.

8. Membrane according to claim 1, **characterized in that** the substituent R is a radical which can be crosslinked by UV irradiation.

9. Membrane according to claim 1, **characterized in that** it is made of a material obtained by crosslinking of a copolymer (I) by irradiation with γ-rays or electrons.

10. Membrane according to claim 1, **characterized in that** it is produced starting from a copolymer of ethylene oxide EO and epichlorohydrin EP in which the ratio of the number of EO/EP units is between 50/50 and 98/2.

11. Process for the selective separation of gases from a gas mixture, **characterized in that** it comprises a stage in the course of which the gas mixture is passed through a membrane according to one of claims 1 to 10.

12. Process for the selective separation of carbon dioxide contained in a gas mixture, **characterized in that** it comprises a stage in the course of which the gas mixture is passed through a membrane according to one of claims 1 to 10.

13. Process for the preservation of fruit and vegetables, **characterized in that** it comprises placing the said fruit or vegetables in a wrapping made of a membrane according to one of claims 1 to 10.

## Patentansprüche

1. Membran zur selektiven Gastrennung bestehend aus einem Ethylenoxidcopolymer (I) oder aus einem polymeren Material, welches durch die Vernetzung eines solchen Copolymers (I) erhalten wurde, wobei das genannte Copolymer (I) **dadurch gekennzeichnet ist, dass** es besteht aus:
- mindestens 30% der Anzahl an -CH₂CH₂O- Einheiten, die von Ethylenoxid abgeleitet sind, und
- mindestens 2% der Anzahl an -CHR-CH₂O- Einheiten, die abgeleitet sind von einem Oxyran enthaltend einen vernetzbaren Rest R, und/oder an -CHR₁-CH₂O-Einheiten, die abgeleitet sind von einem Oxyran enthaltend einen nicht-vernetzbaren Rest R₁.

2. Membran nach Anspruch 1, **dadurch gekennzeichnet, dass** alle vernetzbare Reste R identisch sind und/oder dass alle nicht-vernetzbaren Reste R₁ identisch sind.

3. Membran nach Anspruch 1, **dadurch gekennzeichnet, dass** das Copolymer unterschiedliche Reste R und/oder unterschiedliche Reste R₁ trägt.

4. Membran nach Anspruch 1, **dadurch gekennzeichnet, dass** der Rest R₁ gewählt ist aus den Alkylradikalen bzw. Alkylresten mit 1 bis 16 Kohlenstoffatomen, den Radikalen bzw. Resten enthaltend eine oder mehrere Ether- oder Thioether-Gruppen und den Radikalen bzw. Resten enthaltend eine Karboxyl-Gruppe oder eine Hydroxyl-Gruppe.

5. Membran nach Anspruch 1, **dadurch gekennzeichnet, dass** der Rest R ein Rest ist, der es erlaubt, das Copolymer (I) zu vernetzen.

6. Membran nach Anspruch 5, **dadurch gekennzeichnet, dass** R ein Radikal bzw. Rest ist enthaltend eine durch Substitution oder durch Addition vernetzbare Gruppe.

7. Membran nach Anspruch 6, **dadurch gekennzeichnet, dass** R ein Haloalkyl-Radikal bzw. -Rest oder ein Radikal bzw. Rest enthaltend eine Doppelbindung >C=C< oder eine Dreifachbindung -C=C- ist.

8. Membran nach Anspruch 1, **dadurch gekennzeichnet, dass** der Rest R ein durch UV-Strahlung vernetzbares Radikal bzw. Rest ist.

9. Membran nach Anspruch 1, **dadurch gekennzeichnet, dass** sie aus einem Material besteht, das durch Vernetzung durch Bestrahlung mit γ-Strahlen oder Elektronen eines Copolymers (I) erhalten wurde.

10. Membran nach Anspruch 1, **dadurch gekennzeichnet, dass** sie hergestellt worden ist ausgehend von einem Copolymer von Ethylenoxid (OE) und Epychlorhydrin (EP), in welchem das Verhältnis der Anzahl an Einheiten OE/EP zwischen 50/50 und 98/2 liegt.

11. Verfahren zur selektiven Gastrennung eines Gasgemisches, **dadurch gekennzeichnet, dass** es einen Schritt enthält, in welchem man das Gasgemisch durch eine Membran nach einem der Ansprüche 1 bis 10 leitet.

12. Verfahren zur selektiven Trennung von in einem Gasgemisch enthaltenem Kohlendioxid, **dadurch gekennzeichnet, dass** es einen Schritt enthält, in welchem man das Gasgemisch durch eine Membran nach einem der Ansprüche 1 bis 10 leitet.

13. Verfahren zur Konservierung von Früchten und von frischem Gemüse, **dadurch gekennzeichnet, dass** es darin besteht, die Früchte oder das Gemüse in einer Umhüllung zu platzieren, die aus einer Membran nach einem der Ansprüche 1 bis 10 besteht.
